# EUROPÄISCHE PATENTSCHRIFT

(11) **EP 2 524 150 B1**
(45) Veröffentlichungstag und Bekanntmachung des Hinweises auf die Patenterteilung: **15.07.2015**
(21) Anmeldenummer: 11700624.7
(22) Anmeldetag: 05.01.2011
(51) Int. Cl.: F16C 35/063

(54) **VERFAHREN ZUM FESTLEGEN EINES LAGERRINGS AN ODER IN EINEM BAUTEIL**
METHOD FOR FIXING A BEARING RING TO OR IN A PART
PROCÉDÉ POUR FIXER UNE BAGUE DE PALIER SUR OU DANS UN ÉLÉMENT

(30) Priorität: 16.01.2010 DE 102010004791
(43) Veröffentlichungstag der Anmeldung: 21.11.2012
(73) Patentinhaber: Aktiebolaget SKF, 41 550 Göteborg (SE)
(72) Erfinder: MEYER, Wilhelm, 97453 Reichmannshausen (DE); WOHLFEIL, Florian, 97464 Niederwerrn (DE)
(74) Vertreter: Schonecke, Mitja
(86) Internationale Anmeldenummer: PCT/EP2011/050090
(87) Internationale Veröffentlichungsnummer: WO 2011/086018

(56) Entgegenhaltungen:
- EP-A1- 1 197 541
- DE-A1-102007 052 574
- DE-U- 7 317 297
- US-A- 5 821 293

## Beschreibung

Die Erfindung betrifft ein Verfahren zum Festlegen eines Lagerrings an oder in einem Bauteil mittels einer Klebeverbindung.

In verschiedenen Fällen, z. B. beim Einsatz langer, gelagerter Wellen, sind bei der Montage von Wälzlagern die freie Positionierbarkeit und ein fester Sitz des Lagers auf dem zu lagernden Bauteil sehr wichtig. Natürlich spielen auch die wirtschaftlichen Aufwendungen zur Realisierung der Befestigung eine große Rolle.

Bekannt und üblich sind für die Festlegung zunächst mechanische Lösungen. Hier kommen Spannhülsen zum Einsatz, die über einen kegeligen Sitz eine kraftschlüssige Verbindung herstellen. Ferner sind Exzenterringe bekannt, mit denen ein fester Verbund zwischen Lager und zu lagerndem Bauteil hergestellt werden kann. Häufig werden auch Schraubverbindungen eingesetzt. Hierbei werden insbesondere Madenschrauben verwendet, die radial zur Welle in ein Verbindungsteil eingeschraubt werden, um das Lager auf dem insbesondere wellenförmigen Bauteil festzulegen.

Nachteilig bei der Befestigung mittels einer Spannhülse ist weiterhin, dass mindestens drei Bauteile zur Befestigung benötigt werden. Diese müssen eine relativ hohe Genauigkeit haben, was entsprechende Kosten verursacht. Neben dem Fertigungs- und Kostenaufwand bedeuteten mehrere Bauteile auch eine Anhäufung von Fertigungstoleranzen. Je nach Lage der Istmaße können sich diese ungünstig addieren. Ein weiteres Problem bei der Montage einer Spannhülse besteht darin, dass der Querschnitt der Hülse aus Festigkeitsgründen so groß gewählt werden muss, dass mit Ausnahme von inkorporierten Spannhülsen (Spezialhülsen) die jeweils nächst größere Lagerkennzahl gewählt werden muss, um auf der anderen Seite den Lagerring nicht zu stark zu schwächen. Diese Tatsache schränkt den Konstruktionsspielraum ein.

So erfordert beispielsweise die Änderung von einer Madenschraubenbefestigung hin zu einer Spannhülsenbefestigung auch eine Anpassung des Einbauraums. Gerade bei Leistungserhöhungen (z. B. bei höheren Drehzahlen) von Maschinen, die eine höhere Laufgenauigkeit erfordern, bedeutet dies, dass die Anwendung nicht mehr so kompakt konstruiert werden kann.

Ein spezielles Problem beim Einsatz von Spannhülsen besteht darin, dass sich die gewünschte Lage des Lagers bei der Montage über das Aufschieben nur schwer definieren lässt. Dies bedeutet in der Praxis, dass der Pressverband wiederholt aufgehoben werden muss, um eine neue Positionierung vornehmen zu können; alternativ müssen konstruktive Maßnahmen ergriffen werden, z. B. eine spezielle Montagevorrichtung geschaffen werden. Gerade die Positionierung des Festlagers erlaubt keine Abweichung von der vorgesehenen Position, da ansonsten die Lage der Welle zur Umgebungskonstruktion unter Umständen die Funktion einschränkt.

Beim Einsatz von Schraubverbindungen und Exzenterringen kommt es zu dem Problem, dass durch diese Befestigungsmöglichkeit eine Verkippung des Lagerrings zu einem wellenförmigen Bauteil auftreten kann. Das führt zu einer reduzierten Laufruhe bzw. Laufgenauigkeit.

Weiterhin besteht das Problem, dass die Befestigungsart je nach der Belastung nicht ausreichend sein kann, um Mikrobewegungen vollständig zu vermeiden. Oft ist in der Passfuge solcher Lager Passungsrost mit entsprechenden Folgeschäden zu beobachten. Wird die Befestigung indes zu stark verspannt, können die Befestigungsmittel (insbesondere die Madenschraube) beschädigt werden.

Hinsichtlich der Festigkeit der Befestigung des Lagerrings auf dem Bauteil ist negativ, dass die Übertragung von Axialkräften deutlich eingeschränkt sein kann. Vor allem beim Einsatz von Madenschrauben tritt durch ein zu starkes Anziehen der Schrauben auch eine Verformung des Lagerrings auf, was zu einem ungünstigen Laufverhalten und zu Verspannungen führt. Dies muss durch eine entsprechend große Lagerluft kompensiert werden. Eine erhöhte Lagerluft bringt jedoch wiederum Nachteile eines ungünstigen Traganteils im Lager mit sich. Ansonsten gilt, dass auch durch die Montage die radiale Lagerluft beeinflusst wird. Je nach Lagerart (z. B. insbesondere bei Rillenkugellagern) ist das Maß der Lagerluftreduzierung nur schwer zu kontrollieren. Das kann dazu führen, dass das Lager radial verspannt wird. Dies macht eine aufwändige Überwachung der Montage erforderlich bzw. ergibt eine Lagerung mit reduzierter Lebensdauer.

Nachteilig ist ferner folgendes: Die Madenschraube erreicht ihre Festigkeit durch das Eingraben in den Werkstoff des Bauteils (Welle), d. h. durch Formschluss. Da dies auf der Welle zu einem Aufwurf führt, wird die Demontage des Lagers erschwert.

Ein spezifisches Problem des Exzenterrings ist, dass eine feste Verbindung nur durch Verdrehen zweier Ringe zueinander erreicht werden kann. Dies bedeutet allerdings, dass bei schnellem Drehrichtungswechsel des Lagers ein Atmen der Passfuge auftreten und sich dadurch der Verband lösen kann.

Bekannt ist es auch, eine Klebeverbindung zur Befestigung eines Lagers an oder in einem Bauteil vorzusehen. Eine solche Lösung ist beispielsweise in der DE 22 03 664 A1 beschrieben. Der Klebstoff wird dabei unmittelbar bei der Montage in die Passfuge zwischen den zu verbindenden Teilen eingebracht. Dieses Verfahren hat den Nachteil, dass sich das Einbringen eines Klebstoffs in Montagelinien schwierig gestaltet bzw. die Prozesssicherheit - insbesondere hinsichtlich der Menge an zuzuführendem Klebstoff und hinsichtlich der Sauberkeit der Fügepartner - von den Gegebenheiten bei der Montage bzw. vom jeweiligen Montagearbeiter abhängt.

Des Weiteren besteht bei der vorbekannten Lösung der Nachteil, dass bei manueller Einbringung des Klebstoffs Umgebungsbauteile, wie z. B. Dichtungen, mit Klebstoff benetzt werden können. Hierdurch kann die Funktion derartiger Bauteil nachteilig beeinflusst werden.

Weiter ist es aus der DE 10 2007 052 574 A1 bekannt, in den mit einer Welle zu verklebenden Lagerinnenring eine Ringnut einzuarbeiten, in die ein geschlitzter hohlzylindrischer Ring aus Klebematerial eingelegt wird. Wenn Welle und Lagerring in der gewünschten Relativposition angeordnet sind, wird der Klebstoff aktiviert, wodurch sich der gewünschte Klebeverbund ergibt. Wenngleich damit bereits eine stabile Klebeverbindung hergestellt werden kann, die eine einfach handhabbare Technologie darstellt, muss hier wegen des separaten Teils aus Klebstoff nachteilig ein relativ großer Spalt zwischen der Welle und dem Lagerring vorgesehen werden, was zumindest in diesem Bereich die Kleber-Tragfähigkeit einschränkt. Andere Lösungen sind in der DE 73 17 297 U, in der EP 1 197 541 A1 und in der US 5 821 293 A beschrieben.

Der Erfindung liegt daher die Aufgabe zugrunde, ein Verfahren zum Festlegen eines Lagerrings an oder in einem Bauteil mittels einer Klebeverbindung so fortzubilden, dass eine weiter verbesserte Handhabung und einfachere und somit wirtschaftlichere Verbindung hergestellt werden kann. Dabei wird auch eine höhere Tragfähigkeit des Klebers als bei der vorbekannten Lösung angestrebt.

Die **Lösung** dieser Aufgabe durch die Erfindung ist dadurch gekennzeichnet, dass das Verfahren die Schritte aufweist:
a) Aufbringen des Klebstoffs auf eine Fläche des Lagerrings und/oder auf eine Fläche des Bauteils, wobei der Klebstoff zwei reaktive Komponenten aufweist und wobei die eine Komponente in einer Anzahl Kapseln angeordnet und so von der anderen Komponente getrennt ist,
b) Fügen des Lagerrings und des Bauteils in die gewünschte relative Position, in der sie verklebt werden sollen,
c) gleichzeitig mit Schritt b) und/oder nach Schritt b): Zerstören der Trennwirkung der Kapseln, so dass sich die in den Kapseln befindliche Komponente mit der anderen Komponente vermischt und eine Aushärtereaktion zwischen beiden Komponenten stattfinden kann,
wobei die Trennwirkung der Kapseln durch in den Klebstoff und/oder in das Material der Kapsel eingebrachte Wärmeenergie nach dem Fügevorgang gemäß Schritt b) zerstört wird.

Die beiden Komponenten des Klebstoffs dabei bevorzugt so gewählt, dass eine anaerobe Aushärtung erfolgen kann.

Beim Aufbringen des Klebstoffs gemäß obigem Schritt a) wird bevorzugt Klebstoff mit einer pastösen Konsistenz verwendet.

Die Kapseln, in denen sich die eine Komponente des Klebstoffs befindet, sind bevorzugt aus Kunststoffmaterial hergestellt.

Es ist insbesondere an eine Einbringung von Wärmeenergie durch Induktion gedacht.

Möglich ist es gemäß einer alternativen Ausgestaltung der Erfindung auch, dass die Kapseln aus einem ferromagnetischen Material bestehen, wobei die Trennwirkung der Kapseln durch eine äußere magnetische Kraft nach dem Fügevorgang zerstört wird.

In der dem Bauteil zugewandten Fläche des Lagerrings kann ein Aufnahmeraum für Klebstoff angeordnet sein, der beim Aufbringen des Klebstoffs gemäß obigem Schritt a) zumindest teilweise mit Klebstoff gefüllt wird. Der Aufnahmeraum kann dabei durch mindestens eine Ringnut gebildet werden. Der dem Aufnahmeraum benachbarte und einem axialen Ende des Lagerrings zugewandte Bereich kann einen reduzierten radialen Spaltabstand zwischen Lagerring und Bauteil aufweisen, der eine Barriere für den Klebstoff bildet. Dadurch kann der sich im Aufnahmeraum befindliche Kunststoff nicht so leicht nach außen abfließen.

Das Fügen des Bauteils und des Lagerrings erfolgt in einem Status des Klebstoffs, in der dieser noch nicht "klebt", da die beiden Komponenten des Kunststoffs noch nicht vermischt sind. Erst nach dem Erreichen der genauen Relativposition zwischen den zu verbindenden Bauteilen wird der Klebstoff "aktiviert", d. h. die beiden Komponenten in Kontakt gebracht, so dass der Klebeverbund hergestellt wird.

Der Fluss des Klebstoffs kann nach seiner Aktivierung durch Vermischung der beiden Komponenten in axiale Richtung zwischen Lagerring und Bauteil durch mindestens ein Barriereelement begrenzt werden, das - wie erwähnt - als Spalt mit reduziertem Spaltabstand ausgeführt sein kann. Als Barriereelement kann auch ein Dichtungsring in Frage kommen, der als O-Ring ausgebildet sein kann. Andererseits kann es sich dabei auch um einen Kalibrierring handeln. Das Barriereelement ist dabei bevorzugt in einer Ringnut im Lagerring oder im Bauteil angeordnet.

Der Lagerring ist bevorzugt der Innenring eines Wälzlagers und das Bauteil dann eine Welle. Es ist aber auch genauso möglich, dass der Lagerring der Außenring eines Wälzlagers und das Bauteil ein Gehäuse ist.

Die vorgeschlagene Verfahrensweise bietet den Vorteil, dass in kostengünstiger Weise ein stabiler Klebeverbund herstellbar ist. Es können problemlos unterschiedliche Werkstoffe mit unterschiedlichen Material-Kennwerten miteinander verbunden werden.

Mit der vorgeschlagenen Lösung kann auch erreicht werden, dass in einfacher Weise die Maßgenauigkeit und die Oberflächengüte des Verbundes verbessert werden kann, da fertigungsbedingte Toleranzen besser überbrückt werden können.

In der Zeichnung ist ein Ausführungsbeispiel der Erfindung dargestellt. Es zeigen:
- Fig. 1: den Radialschnitt durch einen Innenring eines Wälzlagers, wobei auf die Innenbohnmg ein Klebstoff aufgetragen wurde,
- Fig. 2: schematisch in vergrößerter Darstellung den Klebstoff, der zwei noch nicht miteinander vermischte Komponenten aufweist,
- Fig. 3: den Vorgang des Aktivierens des Klebstoffs, d. h. des Zusammenbringens der beiden Komponenten des Klebstoffs, wodurch sich ein Klebeverbund zwischen Innenring und Welle ergibt, und
- Fig. 4: den Radialschnitt durch den Innenring, wobei hier einige Details der Ausgestaltung dargestellt sind, die in Fig. 1 weggelassen wurden.

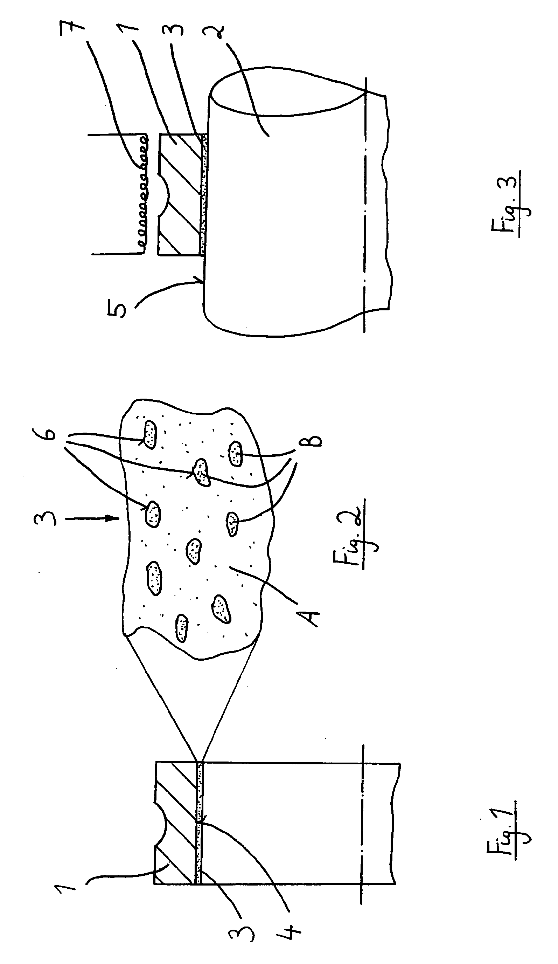

In Fig. 1 ist ein Innenring 1 eines Kugellagers skizziert, der mit einer in Fig. 1 nicht dargestellten Welle verbunden werden soll, und zwar durch einen Klebevorgang. Hierzu ist auf die innenzylindrische Fläche 4 des Innenrings 1 ein Klebstoff 3 aufgebracht. Dieser Klebstoff 3 hat bei seiner Aufbringung auf den Innenrings 1 eine pastöse Konsistenz.

Der Aufbau des Klebstoffs 3 ist in Fig. 2 schematisch angedeutet. Bei dem Klebstoff handelt es sich um einen Zwei-Komponenten-Klebstoff. In der einen Komponente A ist die Komponente B enthalten, allerdings eingeschlossen in kleinen Kapseln 6 und daher getrennt von der Komponente A.

Die Kapseln 6 können aus sehr dünnem Kunststoffmaterial bestehen, das sehr empfindlich gegen mechanische Kräfte und/oder gegen thermische Beaufschlagung ist. Demgemäß kann durch äußere mechanische Kräfte bzw. durch Erhitzung der Kapseln 6 bzw. deren Inhalt ein Platzen der Kapseln 6 bewerkstelligt werden. Dies hat zur Folge, dass sich die beiden Kunststoffkomponenten A und B vermischen und miteinander reagieren können.

Ein Platzen der Kapseln 6 bei der Beaufschlagung mittels Wärme wird dadurch begünstigt, wenn sich die Komponente B bei der Erwärmung zumindest geringfügig ausdehnt.

In den Lagerring 1 (der natürlich bereits mit einem nicht dargestellten Lageraußenring und den Wälzkörpern verbunden sein kann) wird - was in Fig. 3 dargestellt ist - ein Bauteil 2 in Form einer Welle eingeschoben, wobei Lagerring 1 und Welle 2 miteinander verklebt werden sollen.

Es sei angemerkt, dass auch vorgesehen werden kann, die Fläche 5 des Bauteils 2 mit Klebstoff 3 zu versehen.

Befinden sich Lagerring 1 und Welle 2 in der gewünschten Relativposition, in der der Kleberverbund hergestellt werden soll, wird im vorliegenden Beispielsfall mittels einer Induktionsspule 7 eine Erhitzung des Klebstoffs 3 und insbesondere der Komponente B in den Kapseln 6 verursacht. Die entstehende Wärme bringt die Kapseln 6 zum Platzen, so dass die Komponente B freigesetzt wird und sich mit der Komponente A vermischen kann. Es kommt mithin zu der gewünschten Reaktion zwischen den beiden Klebstoffkomponenten A und B und zu einem Aushärten des Klebstoffs, wodurch die beiden Teile 1 und 2 fest miteinander verbunden werden.

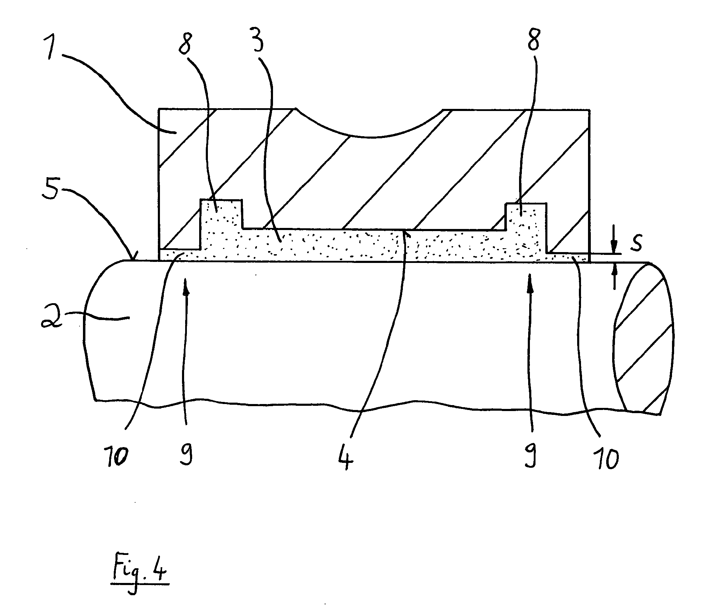

In Fig. 4 ist angedeutet, wie die Fläche 4 ausgebildet sein kann, auf die der Klebstoff 3 aufgetragen wird. Zu erkennen ist, dass in den seitlichen Endbereichen des Lagerrings 1 zwei Aufnahmeräume 8 in Form einer Ringnut eingearbeitet sind. In den sich nach außen hin anschließenden Bereichen 9 ist die Bohrung des Innenrings 1 etwas im Durchmesser verkleinert, so dass sich ein relativ enger Spalt 10 mit einem Spaltabstand s ergibt. Hierdurch wird eine Barrierewirkung für den Klebstoff 3 erzielt, wenn dieser ausreagiert, was gegebenenfalls mit einer Volumenvergrößerung einher gehen kann.

In den Bohrungsdurchmesser des Innenrings 1 kann gegebenenfalls auch eine spiralförmig verlaufende Nut eingearbeitet sein, die die Verteilung des Klebstoffs 3 im Raum zwischen Innenring 1 und Welle 2 erleichtert.

Als Klebstoff wird bevorzugt ein chemisch härtender Klebstoff eingesetzt. Bei diesem Klebstoff (auch als Reaktionsklebstoff bezeichnet) werden die einzelnen chemischen Bausteine (hier: die Komponenten A und B) für den Klebstoff im entsprechenden Verhältnis in den Raum zwischen Lagerring 1 und Bauteil 2 eingebracht. Die Verfestigung erfolgt dann durch eine chemische Reaktion der Komponenten A und B.

Die hier bevorzugten Reaktionsklebstoffe sind als zwei- bzw. mehrkomponentige Klebstoffe ausgeführt. In den einzelnen Komponenten A und B befindet sich die Monomere, d. h. die Grundbausteine des bei der Reaktion entstehenden Polymers. Eine der beiden Komponenten kann Harzmonomere (oder auch Binder) enthalten, während die andere Komponente Härter enthält. Als weitere Inhaltsstoffe der Zubereitungen können Stabilisatoren, Thixotropiermittel, Beschleuniger und weitere Additive zum Einsatz kommen.

Mit dem Kontakt von Harz und Härter - nach dem Platzen der Kapseln 6 - startet die chemische Reaktion zum Klebstoffpolymer. Durch die fortschreitende Reaktion nimmt die Viskosität der Mischung stetig zu. In der Aushärtezeit baut sich die Endfestigkeit der Verklebung auf. Diese Aushärtezeit wird stark von äußeren Einflüssen, insbesondere von der Temperatur, beeinflusst. Eine Temperaturerhöhung führt zu einer beschleunigten Aushärtung und oft auch zu einer höheren Festigkeit, während niedrigere Temperaturen die Aushärtezeit verlängern.

Für besondere Anwendungsfälle werden auch Drei- oder Mehrkomponentenklebstoffe eingesetzt, die grundsätzlich bei der vorliegenden Erfindung auch eingesetzt werden können.

Vorteilhaft ist es, wenn die Aushärtung des Klebstoffs unter Ausschluss von Sauerstoff (also anaerob) erfolgt, wenn der Klebstoff in einer engen Klebefuge von der Umgebungsluft abgeschlossen wird. Es können nur metallische Werkstoffe damit geklebt werden, da für die Aushärtung freie Metallionen als Reaktionspartner benötigt werden (bzw. ein Fügepartner muss in der Lage sein, freie Metallionen abgeben zu können).

### Bezugszeichenliste

- 1: Lagerring (Innenring)
- 2: Bauteil (Welle)
- 3: Klebstoff
- 4: Fläche
- 5: Fläche
- 6: Kapsel
- 7: Induktionsspule
- 8: Aufnahmeraum
- 9: Bereich
- 10: Spalt

- A: Komponente des Klebstoffs
- B: Komponente des Klebstoffs
- s: Spaltabstand

## Patentansprüche

1. Verfahren zum Festlegen eines Lagerrings (1) an oder in einem Bauteil (2) mittels einer Klebeverbindung,
**dadurch gekennzeichnet,**
**dass** das Verfahren die Schritte aufweist:
a) Aufbringen des Klebstoffs (3) auf eine Fläche (4) des Lagerrings (1) und/oder auf eine Fläche (5) des Bauteils (2), wobei der Klebstoff (3) zwei reaktive Komponenten (A, B) aufweist und wobei die eine Komponente (B) in einer Anzahl Kapseln (6) angeordnet und so von der anderen Komponente (A) getrennt ist,
b) Fügen des Lagerrings (1) und des Bauteils (2) in die gewünschte relative Position, in der sie verklebt werden sollen,
c) gleichzeitig mit Schritt b) und/oder nach Schritt b): Zerstören der Trennwirkung der Kapseln (6), so dass sich die in den Kapseln (6) befindliche Komponente (B) mit der anderen Komponente (A) vermischt und eine Aushärtereaktion zwischen beiden Komponenten stattfinden kann,
wobei die Trennwirkung der Kapseln (6) durch in den Klebstoff und/oder in das Material der Kapsel (6) eingebrachte Wärmeenergie nach dem Fügevorgang gemäß Schritt b) zerstört wird.

2. Verfahren nach Anspruch 1, **dadurch gekennzeichnet, dass** die beiden Komponenten (A, B) des Klebstoffs so gewählt sind, dass eine anaerobe Aushärtung erfolgt.

3. Verfahren nach Anspruch 1 oder 2, **dadurch gekennzeichnet, dass** beim Aufbringen des Klebstoffs (3) gemäß Schritt a) von Anspruch 1 Klebstoff mit einer pastösen Konsistenz verwendet wird.

4. Verfahren nach einem der Ansprüche 1 bis 3, **dadurch gekennzeichnet, dass** die Kapseln (6) aus Kunststoffmaterial, insbesondere aus einer dünnen Kunststofffolie, bestehen.

5. Verfahren nach einem der Ansprüche 1 bis 4, **dadurch gekennzeichnet, dass** die Wärmeenergie durch Induktion eingebracht wird.

6. Verfahren zum Festlegen eines Lagerrings (1) an oder in einem Bauteil (2) mittels einer Klebeverbindung,
**dadurch gekennzeichnet,**
**dass** das Verfahren die Schritte aufweist:
a) Aufbringen des Klebstoffs (3) auf eine Fläche (4) des Lagerrings (1) und/oder auf eine Fläche (5) des Bauteils (2), wobei der Klebstoff (3) zwei reaktive Komponenten (A, B) aufweist und wobei die eine Komponente (B) in einer Anzahl Kapseln (6) angeordnet und so von der anderen Komponente (A) getrennt ist,
b) Fügen des Lagerrings (1) und des Bauteils (2) in die gewünschte relative Position, in der sie verklebt werden sollen,
c) gleichzeitig mit Schritt b) und/oder nach Schritt b): Zerstören der Trennwirkung der Kapseln (6), so dass sich die in den Kapseln (6) befindliche Komponente (B) mit der anderen Komponente (A) vermischt und eine Aushärtereaktion zwischen beiden Komponenten stattfinden kann,
wobei die Kapseln (6) aus einem ferromagnetischen Material bestehen, wobei die Trennwirkung der Kapseln (6) durch eine äußere magnetische Kraft nach dem Fügevorgang gemäß Schritt b) zerstört wird.

7. Verfahren nach Anspruch 6, **dadurch gekennzeichnet, dass** die beiden Komponenten (A, B) des Klebstoffs so gewählt sind, dass eine anaerobe Aushärtung erfolgt.

8. Verfahren nach Anspruch 6 oder 7, **dadurch gekennzeichnet, dass** beim Aufbringen des Klebstoffs (3) gemäß Schritt a) von Anspruch 6 Klebstoff mit einer pastösen Konsistenz verwendet wird.

## Claims

1. Method for fixing a bearing ring (1) on or in a component (2) by means of an adhesive connection, **characterized**
**in that** the method has the following steps:
a) applying the adhesive (3) to a surface (4) of the bearing ring (1) and/or to a surface (5) of the component (2), the adhesive (3) having two reactive components (A, B), and the one component (B) being arranged in a number of capsules (6) and thus being separated from the other component (A),
b) fitting the bearing ring (1) and the component (2) into the desired relative position in which they are intended to be bonded,
c) at the same time as step b), and/or after step b) : destroying the separating effect of the capsules (6) such that the component (B) in the capsules (6) mixes with the other component (A) and a curing reaction between the two components can take place,
wherein the separating effect of the capsules (6) is destroyed by thermal energy introduced into the adhesive and/or into the material of the capsules (6) after the fitting operation according to step b).

2. Method according to Claim 1, **characterized in that** the two components (A, B) of the adhesive are selected in such a manner that anaerobic curing takes place.

3. Method according to Claim 1 or 2, **characterized in that**, for the application of the adhesive (3) according to step a) of claim 1, use is made of adhesive with a pasty consistency.

4. Method according to one of Claims 1 to 3, **characterized in that** the capsules (6) are composed of plastics material, in particular of a thin plastics film.

5. Method according to one of Claims 1 to 4, **characterized in that** the thermal energy is introduced by induction.

6. Method for fixing a bearing ring (1) on or in a component (2) by means of an adhesive connection,
**characterized**
**in that** the method has the following steps:
a) applying the adhesive (3) to a surface (4) of the bearing ring (1) and/or to a surface (5) of the component (2), the adhesive (3) having two reactive components (A, B), and the one component (B) being arranged in a number of capsules (6) and thus being separated from the other component (A),
b) fitting the bearing ring (1) and the component (2) into the desired relative position in which they are intended to be bonded,
c) at the same time as step b), and/or after step b) : destroying the separating effect of the capsules (6) such that the component (B) in the capsules (6) mixes with the other component (A) and a curing reaction between the two components can take place,
wherein the capsules (6) are composed of a ferromagnetic material, the separating effect of the capsules (6) being destroyed by an external magnetic force after the fitting operation according to step b).

7. Method according to Claim 6, **characterized in that** the two components (A, B) of the adhesive are selected in such a manner that anaerobic curing takes place.

8. Method according to Claim 6 or 7, **characterized in that**, for the application of the adhesive (3) according to step a) of claim 6, use is made of adhesive with a pasty consistency.

## Revendications

1. Procédé pour fixer une bague de palier (1) sur ou dans un élément (2) au moyen d'une liaison adhésive,
**caractérisé en ce que**
le procédé comprend les étapes suivantes :
a) application de l'adhésif (3) sur une surface (4) de la bague de palier (1) et/ou sur une surface (5) de l'élément (2), l'adhésif (3) comprenant deux composants réactifs (A, B) et l'un des composants (B) étant disposé dans un certain nombre de capsules (6) et étant ainsi séparé de l'autre composant (A),
b) assemblage de la bague de palier (1) et de l'élément (2) dans la position relative souhaitée, dans laquelle ils doivent être collés,
c) simultanément à l'étape b) et/ou après l'étape b) : destruction de l'effet de séparation des capsules (6), de telle sorte que le composant (B) se trouvant dans les capsules (6) se mélange avec l'autre composant (A) et qu'une réaction de durcissement entre les deux composants puisse avoir lieu,
l'effet de séparation des capsules (6) étant détruit au moyen d'une énergie thermique introduite dans l'adhésif et/ou dans le matériau des capsules (6) après l'opération d'assemblage selon l'étape b).

2. Procédé selon la revendication 1, **caractérisé en ce que** les deux composants (A, B) de l'adhésif sont sélectionnés de telle sorte qu'un durcissement anaérobie s'effectue.

3. Procédé selon la revendication 1 ou 2, **caractérisé en ce que**, lors de l'application de l'adhésif (3) selon l'étape a) de la revendication 1, un adhésif présentant une consistance pâteuse est utilisé.

4. Procédé selon l'une quelconque des revendications 1 à 3, **caractérisé en ce que** les capsules (6) sont constituées de matière plastique, en particulier d'une feuille de plastique mince.

5. Procédé selon l'une quelconque des revendications 1 à 4, **caractérisé en ce que** l'énergie thermique est introduite par induction.

6. Procédé pour fixer une bague de palier (1) sur ou dans un élément (2) au moyen d'une liaison adhésive,
**caractérisé en ce que**
le procédé comprend les étapes suivantes :
a) application de l'adhésif (3) sur une surface (4) de la bague de palier (1) et/ou sur une surface (5) de l'élément (2), l'adhésif (3) comprenant deux composants réactifs (A, B) et l'un des composants (B) étant disposé dans un certain nombre de capsules (6) et étant ainsi séparé de l'autre composant (A),
b) assemblage de la bague de palier (1) et de l'élément (2) dans la position relative souhaitée, dans laquelle ils doivent être collés,
c) simultanément à l'étape b) et/ou après l'étape b) : destruction de l'effet de séparation des capsules (6), de telle sorte que le composant (B) se trouvant dans les capsules (6) se mélange avec l'autre composant (A) et qu'une réaction de durcissement entre les deux composants puisse avoir lieu,
les capsules (6) étant constituées d'un matériau ferromagnétique, l'effet de séparation des capsules (6) étant détruit au moyen d'une force magnétique externe après l'opération d'assemblage selon l'étape b).

7. Procédé selon la revendication 6, **caractérisé en ce que** les deux composants (A, B) de l'adhésif sont sélectionnés de telle sorte qu'un durcissement anaérobie s'effectue.

8. Procédé selon la revendication 6 ou 7, **caractérisé en ce que**, lors de l'application de l'adhésif (3) selon l'étape a) de la revendication 6, un adhésif présentant une consistance pâteuse est utilisé.
